# EUROPÄISCHE PATENTSCHRIFT

(11) **EP 2 516 075 B1**
(45) Veröffentlichungstag und Bekanntmachung des Hinweises auf die Patenterteilung: **08.07.2020**
(21) Anmeldenummer: 10805370.3
(22) Anmeldetag: 23.12.2010
(51) Int. Cl.: B21B 45/02, B21B 1/26, B21B 45/00, C21D 1/42, C21D 8/02, C21D 9/46

(54) **THERMOMECHANISCHES BEHANDLUNGSVERFAHREN**
Thermomechanical processing method
Procédé de traitement thermomécanique

(30) Priorität: 23.12.2009 EP 09450241
(43) Veröffentlichungstag der Anmeldung: 31.10.2012
(73) Patentinhaber: Voestalpine Grobblech GmbH, 4020 Linz (AT)
(72) Erfinder: GRILL, Rainer, A - 8992 Altaussee (AT); EGGER, Rupert, A-4481 Asten (AT); STINGEDER, Christian, A-4020 Linz (AT)
(74) Vertreter: Jell, Friedrich
(86) Internationale Anmeldenummer: PCT/AT2010/000493
(87) Internationale Veröffentlichungsnummer: WO 2011/079341

(56) Entgegenhaltungen:
- EP-A1- 0 227 199
- DE-A1- 2 649 019
- JP-A- 9 003 539
- JP-A- H06 264 181
- JP-A- H06 264 183

## Beschreibung

### Technisches Gebiet

Die Erfindung bezieht sich auf ein thermomechanisches Behandlungsverfahren für die Herstellung von Grobblech aus einem Vormaterial zur Erhöhung der Zähigkeit, insbesondere Tieftemperaturzähigkeit, des Grobblechs, bei dem das Grobblech erwärmt, durch Walzen teil- und endumgeformt und gegenüber einer Abkühlung bei Umgebungstemperatur beschleunigt abgekühlt wird, wobei das für ein Teilumformen auf über Ac3 Temperatur erwärmte Grobblech nach seinem Endumformen beschleunigt abgekühlt wird.

### Stand der Technik

Um bei Blechen Gefügezustände erreichen zu können, die sich durch höherwertige mechanisch-technologische Eigenschaften auszeichnen, als diese von konventionellen Wärmebehandlungsverfahren bekannt sind, sind aus dem Stand der Technik thermomechanische Behandlungsverfahren für die Herstellung von Grobblech bekannt, bei denen das Vormaterial bzw. Blech eine aufeinander abgestimmte Kombination von Umformung und Temperaturführung unterworfen wird.

Ein thermomechanisches Behandlungsverfahren unterscheidet sich daher von einem konventionellen Warmwalzen (z.B.: rolled, hot rolled etc.) dadurch, dass das Walzen nicht nur als Formgebungsverfahren eingesetzt wird, sondern gezielt zur Einstellung von Eigenschaftskombinationen benutzt wird. Damit sollen Forderungen beispielsweise nach hohen Werten der Streckgrenze, Zugfestigkeit kombiniert mit hoher Zähigkeit bei tiefen Temperaturen sowie einer guten Schweißbarkeit erfüllbar werden.

So ist es beispielsweise bei thermomechanischen Behandlungsverfahren für Grobbleche bekannt, das Grobblech nach seinem Teil- und Endumformen beschleunigt aus dem Austenitgebiet abzukühlen, um damit für ein feinkörniges Gefüges zum Erreichen von erhöhten Zähigkeitswerten zu sorgen. Dies ist beispielsweise gerade bei einer Verwendung derartiger Grobbleche für Gasrohrleitungen wesentlich, weil dort eine vergleichsweise hohe Tieftemperaturzähigkeit gefordert wird. Außerdem kann die durch ein thermomechanisches Behandlungsverfahren erzielbare Kornfeinung verbessert werden, in dem dem Blechwerkstoff bestimmte Legierungselemente, beispielsweise Niob, zugesetzt werden. Es hat sich jedoch mit zunehmender Blechdicke herausgestellt, dass die an sich von dünnen Blechen bekannten thermomechanischen Behandlungsvorteile nicht mehr in gleichem Maße erreicht werden können. Grenzen in der mechanischen Umformleistung der Walzgerüste einerseits und in den zur Verfügung stehenden Umformgraden andererseits scheinen hier gemeinsam mit anderen Parametern zu einer Reduktion von erreichbaren Zähigkeitswerten bei Grobblechen zu führen, so dass für erhöhte Werte meist auf eine andere chemische Zusammensetzung der Stahllegierung und eine nachfolgende Wärmebehandlung ausgewichen werden muss, was vergleichsweise kostenintensiv und zusätzlich auch zeitintensiv ist.

Bei einem konventionellen Warmwalzen (hot-rolled) von Bändern ist es bekannt (JP2005-133177), ein nach dem Teilwalzen auf unter Ar3 Temperatur abgekühltes Band induktiv auf über Ac3 zu erwärmen und anschließend endzuwalzen. Damit soll eine verbesserte Walzbarkeit des Bands erreicht sowie auch die Homogenität des Gefüges des Bandwerkstoffs verbessert werden. Letzteres führt auch zu verbesserten und gleichmäßigeren Festigkeitseigenschaften des Bandwerkstoffs, was auch beim Tiefziehen der daraus gefertigten Waren von Vorteil sein kann. Eine Verbesserung der Zähigkeit des Bandwerkstoffs wird in der JP2005-133177 nicht erwähnt.

Daran kann auch das konventionelle Warmwalzen (hot-rolling) der EP0227199A1 nichts hinzufügen, die offenbart, eine gleichmäßige Struktur ohne Duplex-Struktur zu schaffen, in dem die Bandkanten induktiv über Ac3 erwärmt werden, nachdem diese aufgrund einer Entzunderung unter Ar3 abgekühlt sind (Seite 7, Zeile 14).

Gemäß der JP9003539A ist weiter ein konventionelles Warmwalzen (hot-rolled) bekannt, bei dem ein Hohlkörper, dessen Temperatur nach seiner Formgebung auf unter Ar3 gesunken ist, auf über Ac3 zu erwärmen, wonach dieser einem Endwalzen unterworfen wird (vgl. Zusammenfassung). Auch hier wird nicht auf ein thermomechanisches Behandlungsverfahren samt den Problemen bei der Herstellung von Grobblechen eingegangen, wobei sich Hohlkörper gegenüber Grobblechen in der Geometrie deutlich unterscheiden, so dass die JP9003539A zur Erfindung nichts beitragen kann.

Außerdem ist es aus der DE2649019A1 bekannt, die Wirksamkeit von Bor hinsichtlich einer Härtbarkeit von Platten zu überprüfen, in dem eine vorgewalzte Platte auf 930 Grad Celsius wieder erwärmt, anschließend ausgewalzt und dann abgeschreckt wird (Seite 22). Mit einer Erhöhung der Zähigkeit von Grobblechen, hergestellt durch ein thermomechanisches Behandlungsverfahren, befasst sich die DE2649019A1 nicht.

### Darstellung der Erfindung

Die Erfindung hat sich daher die Aufgabe gestellt, ausgehend vom eingangs geschilderten Stand der Technik ein thermomechanisches Behandlungsverfahren für Grobbleche zu schaffen, das sich insbesondere in verbesserten Zähigkeitswerten eines damit behandelten Grobbleches auszeichnet. Außerdem soll das Verfahren schnell, einfach anwendbar und kostengünstig sein.

Die Erfindung löst die gestellte Aufgabe durch ein Verfahren gemäß Anspruch 1.

Wird das Grobblech zwischen Teil- und Endumformen auf unter Ar3 Temperatur beschleunigt abgekühlt und anschließend induktiv auf über Ac3 Temperatur erwärmt, so können überraschend die von bekannten thermomechanischen Behandlungsverfahren erreichbaren Zähigkeitswerte für Grobbleche vergleichsweise deutlich verbessert werden. Es hat sich nämlich herausgestellt, dass eine zwischen den Walzschritten durchgeführte beschleunigte und damit schnelle Abkühlung in Kombination mit einer induktiven und damit schnellen Erwärmung zu einer besonderen Kornfeinung des Austenits führen kann, mit dem unter Kombination der weiteren Verfahrensschritte des thermomechanischen Behandlungsverfahrens - im Sinne von Umformung und Temperaturführung - bekannte Grenzen in erreichbaren Zähigkeitswerten überwunden werden können. Damit können auch für dicke Grobbleche neue Gefügezustände erreicht werden, die sich durch höherwertige Zähigkeitseigenschaften auszeichnen können, was ansonsten nur von Blechen mit geringen Dicken bekannt ist. Insbesondere bei Grobblechen mit deren vergleichsweise hohen Blechdicken und den damit einhergehenden Herausforderungen beim Walzumformen wurde eine beträchtliche Verbesserung der Tieftemperaturzähigkeit festgestellt, wodurch sich solch behandelte Grobbleche insbesondere für Rohre bei einer Erdöl- und Erdgasleitung eignen können. Erfindungsgemäß kann sich daher eine zumindest teilweise Umkörnung des Gefüges des Blechs als besonders vorteilhaft zur Verbesserung einer von einem thermomechanisches Behandlungsverfahren erzielbaren Zähigkeit bewähren, obwohl beim erfindungsgemäßen thermomechanischen Behandlungsverfahren eventuell mit verminderten Festigkeitswerten gerechnet werden kann. In diesem Zusammenhang der Umkörnung wird erwähnt, dass der Einfachheit halber unter Umkörnung wenigstens eine teilweise Umwandlung des Gefüges mit Hilfe von wenigstens zwei Phasenübergängen bzw. wenigstens eine zweimalige Phasenumwandlung, nämlich hier aus der y Phase heraus und wieder zurück, verstanden wird. Hinzu kommt, dass eine beschleunigte Abkühlung sowie eine induktive Erwärmung nicht das gesamte Grobblech erfassen muss, was jedoch vorzugsweise der Fall ist. Es ist nämlich auch durchaus vorstellbar, das im Wesentlichen gesamte Grobblech beschleunigt abzukühlen und induktiv zu erwärmen. Die beschleunigte Abkühlung soll bevorzugt eine vergleichsweise schnelle γ-α Umwandlung als auch ein vermindertes Wachstums des Austenitkorns ermöglichen. Vorzugsweise erfolgt die beschleunigte Abkühlung mit einer Wasserbeaufschlagung des Blechs. Bei der induktiven Erwärmung des gesamten Grobblechs wird eine Heizrate von durchschnittlich mehr als 1 Grad Celsius pro Sekunde bevorzugt ausgewählt. Des Weiteren kann sich als vorteilhaft herausstellen, dass durch die beschleunigte Abkühlung ein erhöhter Temperaturgradient über die Blechdicke einstellbar ist, was ebenso zu erhöhten Zähigkeitswerten am Grobblech beitragen kann. Außerdem kann sich das erfindungsgemäße Verfahren besonders durch seine einfache Integrierbarkeit bei bestehenden thermomechanischen Behandlungsverfahren herausstellen. Durch den vergleichsweise kurzen Kühlungs- und vergleichsweise schnellen Erwärmungsschritt, kann es nämlich unter Anwendung dieser Verfahrensschritte zu einer lediglich vergleichsweise geringen Verzögerung im Behandlungsfortschritt kommen, so dass sich das erfindungsgemäße thermomechanische Behandlungsverfahren nicht nur durch verbesserte Materialeigenschaften sondern auch durch einen vergleichsweise hohen Durchsatz an Grobblechen, durch Kostengünstigkeit und durch einfache Anwendbarkeit auszeichnen kann.

Um besonders verbesserte Zähigkeitswerte ermöglichen zu können, kann das Endumformen mit Hilfe eines thermomechanischen oder eines rekristallisationskontrollierten Walzens durchgeführt werden. Im Gegensatz zum rekristallisationskontrollierten Walzens (RCR) rekristallisiert beim thermomechanischen Walzen (TM) das austenitische Korn nicht mehr und kann besonders in Walzrichtung gestreckt werden. Im Zuge dessen können stark deformierte austenitische Körner erzeugt werden, was zur Verringerung der für die Umwandlung maßgeblichen Austenitkorngröße in Blechdickenrichtung und zur Erhöhung der Fehlstellendichte genützt werden kann. Ein derartiges TM Walzen kann unter Umständen derart am fertigen Grobblech nachgewiesen werden, wenn das Verhältnis von Hauptachse zu Nebenachse einer in das ehemalige Austenitkorn eingeschriebene Ellipse einen Wert von 1,25 überschreitet. Durch das TM Endwalzen können somit die Voraussetzungen, geschaffen durch die erfindungsgemäße Kornfeinung zwischen Teil- und Endumformen, noch weiter verbessert werden, um zu einem fertigen Grobblech mit besonderen Zähigkeitseigenschaften zu kommen. Derartige Verbesserungen, wenngleich nicht in diesem Maße, können auch durch ein RCR Endwalzen ermöglicht werden, insbesondere in Kombination mit einer anschließenden beschleunigten Kühlung.

Insbesondere kann sich das erfindungsgemäße Verfahren dadurch auszeichnen, in dem über das Endumformen eine Grobblechenddicke von größer gleich 24 mm eingestellt wird. Damit kann nicht nur eine erhöhte Blechdicke beim Verfahren zugelassen werden, sondern solch ein damit geschaffenes Grobblech kann sich insbesondere gegenüber bekannten Grobblechen gleicher Dicke mit einem Gefüge für eine verbesserte Tieftemperaturzähigkeit abheben.

Wird das Grobblech anschließend an das Teilumformen beschleunigt abgekühlt, dann kann nicht nur ein zügiges Behandlungsverfahren ermöglicht, sondern auch eine verbesserte Kornfeinung geschaffen werden. So kann beispielsweise die vergleichsweise hohe Restwärme des Grobbleches nach dem Teilumformen zur verbesserten Umkörnung des Gefüges beitragen, in dem das Grobblech erhöhte Temperaturunterschiede durch das beschleunigte Abkühlen und dem induktiven Wiedererwärmen unterworfen wird. Außerdem kann das nach dem Teilumformen geschaffene Gefüge des Grobbleches nahezu unverändert der Umkörnung zugeführt werden, weil Wartezeiten zwischen Teilumformen und Abkühlen nahezu unterbleiben können, so dass damit die Zähigkeitswerte des thermomechanisch behandelten Grobbleches zusätzlich verbessert werden können.

Besondere Verhältnisse in der Schaffung von vergleichsweise hohen Zähigkeitswerten können sich ergeben, wenn das Grobblech nach dem Teilumformen beschleunigt auf unter Ar1 Temperatur abgekühlt wird. Damit kann unter anderem eine vollständige Umkörnung des Austenits durch Vermeidung von Mischphasen (γ+α Phase) möglich werden, was zu einer erheblicher Kornfeinung des Austenitgefüges führen kann.

Wird das Grobblech induktiv auf seine Temperatur zum Endumformen erwärmt und anschließend dem Endumformen unterworfen, so kann das Behandlungsverfahren in seinem Ablauf vereinfacht werden, weil keine weiteren Maßnahmen zur Vorbereitung des Grobbleches auf das Endwalzen mehr notwendig sind. Durch das anschließende Endumformen kann auch vorteilhaft eine eventuelle Wölbung des Grobbleches auf einfache Weise unterbunden werden, weil damit keine Wartezeiten bis zum Erreichen der für eine Endwalzung notwendigen Temperatur eingehalten werden müssen und in diesem Sinne das Grobblech unmittelbar nach dem Erwärmen weiterverarbeitet werden kann. Außerdem kann das Grobblech ohne Verzögerung nach einem Umkörnen den weiteren Schritten der thermomechanischen Behandlung unterworfen werden, was nicht nur für ein schnelles und reproduzierbares Behandlungsverfahren sorgen sondern auch ungewollte Veränderungen des Gefüges, die beispielsweise durch Wartezeiten bedingt sein können, vermeiden kann. Hinzu kommt, dass durch dieses Einstellen auch insbesondere die Kernschicht des Grobblechs auf eine vorteilhafte Temperatur gebracht werden kann. Es kann nämlich das Grobblech auf eine Temperatur zum Endumformen derart induktiv erwärmt werden, dass auch die Temperatur der Kernschicht im Nahbereich über der Ar3 Temperatur liegt, so dass durch das Endwalzen eine erhöhte Kornfeinung im Kerngefüge des Grobblechs erzielt werden kann, wodurch sich die Zähigkeit des Grobblechs erhöht.

Besondere thermomechanische Behandlungsparameter können geschaffen werden, wenn die Kernschicht des Grobblechs im Bereich 0 bis 80 Grad Celsius über Ar3 Temperatur, insbesondere 20 Grad über Ac3 Temperatur, induktiv erwärmt wird, weil es dann durch das Endwalzen zu einer besonderen Kornfeinung im Kerngefüge des Grobblechs kommen kann. Es versteht sich von selbst, dass unter Kernschicht des Grobblechs im Querschnitt die mittlere Gefügeschicht des Grobblechs verstanden werden kann, an die die beiden Randschichten des Grobblechs anschließen.

Um die Kornfeinung des Austenits in eine besondere Zähigkeit überführen zu können, kann vorgesehen sein, dass das Grobblech mit einer Walzendtemperatur beim Endumformen von größer gleich Ar3 beschleunigt gekühlt wird. Durch das beschleunigte Abkühlen ausgehend von einer Temperatur über Ar3, kann nämlich das endgewalzte feinkörnige und fehlstellenreiche Austenitgefüge in besonderem Maße in ein homogenes Umwandlungsgefüge übergeführt werden. Das nun durch das thermomechanische Behandlungsverfahren geschaffene Gefüge kann sich insbesondere durch seine Tieftemperaturzähigkeit auszeichnen. Insbesondere soll die Temperatur des Grobblechs beim Endumformen unterhalb der Rekristallisationstemperatur gehalten werden, damit keine Rekristallisation des verformten Austenits mehr eintreten kann und damit das Gefüge eventuell gestört wird.

Der Durchsatz an Grobblechen behandelt durch das erfindungsgemäße thermomechanischen Behandlungsverfahren kann weiter verbessert werden, wenn das Grobblech folgenden aneinander anschließenden Verfahrensschritten unterworfen wird, nämlich Teilumformen, beschleunigtes Abkühlen, induktives Erwärmen, eventuelles Entzundern, Endumformen und beschleunigtes Abkühlen. Eine Zunderwäsche bzw. Entzunderung kann beispielsweise notwendig werden, wenn Zunder (Eisenoxid an der Oberfläche des Grobblechs) mit Hilfe von vergleichsweise hohem Wasserdruck entfernt werden muss, um ein Einwalzen dieses Eisenoxids in das Grobblech zu verhindern.

Das Grobblech kann bevorzugt über seine im Wesentlichen gesamte Blechbreite induktiv erwärmt werden, wodurch sich das erfindungsgemäße Verfahren besonders einfach in bekannte thermomechanische Behandlungsverfahren integrieren lassen kann. Es müssen nämlich dann nicht besondere konstruktive Vorkehrungen bei den Umformgerüsten bzw. Walzgerüsten getroffen werden, um auf die umgekörnten Bereiche des Grobblechs endumformend einwirken zu können. Außerdem kann damit eine gleichmäßige Umkörnung des Gefüges für eine homogene Austenitkorngröße über das gesamte Grobblech geschaffen werden. Besondere Umformverhältnisse für ein Walzumformen können sich ergeben, wenn über eine im Bereich der Blechober- und -unterseite liegenden Erwärmungszone das Blech induktiv erwärmt wird.

Wird das Blech mit Hilfe einer Längsfelderwärmung induktiv erwärmt, dann kann eine homogene Erwärmung und damit gleichmäßige Kornfeinung über das Grobblechgefüge ermöglicht werden, was die Zähigkeit des Werkstoffs zusätzlich verbessern kann. Besonders eine Längsfelderwärmung kann genützt werden, eine im Querschnitt des Grobblechs geschlossene Erwärmungszone zu schaffen, um von dieser Zone aus eine gleichmäßige Miterwärmung anderer Teile des Grobblechs zu erreichen. Damit kann beispielsweise ein besonders feines Austenitgefüge entstehen. Außerdem kommt hinzu, dass über eine induktive Beaufschlagung des Grobbleches mit einem Magnetfeld zumindest teilweise entlang der Längserstreckung des Grobblechs auch eine verhältnismäßig gleichmäßige Induktion wenigstens in Gefügeteilen des Grobblechs ermöglicht werden kann, was zu verbesserten thermomechanischen Behandlungsparametern führen kann.

Vorzugsweise wird das Grobblech derart für das Endumformen induktiv erwärmt, dass der der Blechober- und -unterseite nahe Blechbereich im Wesentlichen eine gegenüber den anderen Blechteilen erhöhte Temperatur aufweist, um damit besondere Vorrausetzungen zur Austenitkornstreckung beim Endumformen zu ermöglichen. Besonders bei einem TM Walzen als Endumformen kann sich damit im Bereich der halben Blechdicke eine verbesserte Austenitkornstreckung einstellen, was zu erheblich verbesserten Zähigkeitseigenschaften des so hergestellten Grobblechs führen kann.

Wird das Grobblech einem reversierenden Teil- und/oder Endwalzen unterworfen, dann können unter anderem auch erhöhte Blechdicken thermomechanisch behandelt werden. Außerdem kann der Ablauf des thermomechanischen Behandlungsverfahrens damit verbessert gesteuert werden.

Weist ein Grobblech eine geringe Korngröße, hergestellt durch ein thermomechanisches Behandlungsverfahren, bei dem unter anderem eine Umkörnung zwischen zwei Walzschritten durchgeführt wird, auf, dann kann ein Gefüge ermöglicht werden, das beim Grobblech zu einer erhöhten Zähigkeit führen kann.

Besondere Zähigkeitseigenschaften kann ein Grobblech aufweisen, wenn eine ASTM Korngrößennummer des ehemaligen Austenits (ASTM E112 1996 - "American Society for Testing and Materials") von größer gleich 8,5 sowie ein gestrecktes ehemaliges Austenitkorn vorliegt.

Hat das Grobblech eine Grobblechenddicke nach dem Endwalzen von größer gleich 24mm, dann können vergleichsweise dicke Grobbleche mit erhöhten Zähigkeitseigenschaften ermöglicht werden.

Verbesserte Zähigkeitswerte können ermöglicht werden, wenn für das thermomechanische Behandlungsverfahren erfindungsgemäß ein Grobblech mit einer Stahllegierung aufweisend 0,02 bis 0,1 Massen% (C) Kohlenstoff, 1,0 bis 2,0 Massen% (Mn) Mangan, 0 bis 0,1 Massen% (V) Vanadium und (Ti) Titan und (Nb) Niob, 0 bis 1,0 Massen% (Cr) Chrom und (Mo) Molybdän, 0 bis 1,0 Massen% (Cu) Kupfer und (Ni) Nickel, 0 bis 0,003 Massen% (B) Bor, einen CEIIW Wert von 0,2 bis 0,7 Massen%, Rest Verunreinigungen und (Fe) Eisen verwendet wird. Bekanntermaßen kann das Kohlenstoffäquivalent des Internationalen Instituts of Welding (IIW) aus folgender Formel berechnet werden: CEIIW=C+Mn/6+(Cr+Mo+V)/5+(Cu+Ni)/15

### Kurze Beschreibung der Zeichnung

Im Folgenden wird beispielsweise das erfindungsgemäße thermomechanische Behandlungsverfahren anhand eines Ausführungsbeispiels beispielsweise beschrieben. Es zeigen
- Fig. 1: eine schematische Ansicht auf eine Vorrichtung zur Durchführung des thermomechanischen Behandlungsverfahrens,
- Fig. 2A: eine schematische Längsschnittansicht auf das Gefüge eines Grobblechs unterworfen einem thermomechanischen Behandlungsverfahren bekannt aus dem Stand der Technik,
- Fig. 2B: eine schematische Längsschnittansicht auf das Gefüge eines Grobblechs unterworfen dem erfindungsgemäßen thermomechanischen Behandlungsverfahren,
- Fig. 3: eine Querschnittansicht des Grobblechs während der induktiven Erwärmung nach dem Verfahren nach Fig. 1,
- Fig. 4: eine teilweise abgerissene Querschnittansicht des induktiv erwärmten Grobblechs mit einer Darstellung zu seinem Temperaturverlauf,
- Fig. 5: ein Temperaturprofil zum Verfahren nach Fig. 1 und
- Fig. 6: eine vergrößerte Relativdarstellung zu zwei Gefügen.

### Weg zur Ausführung der Erfindung

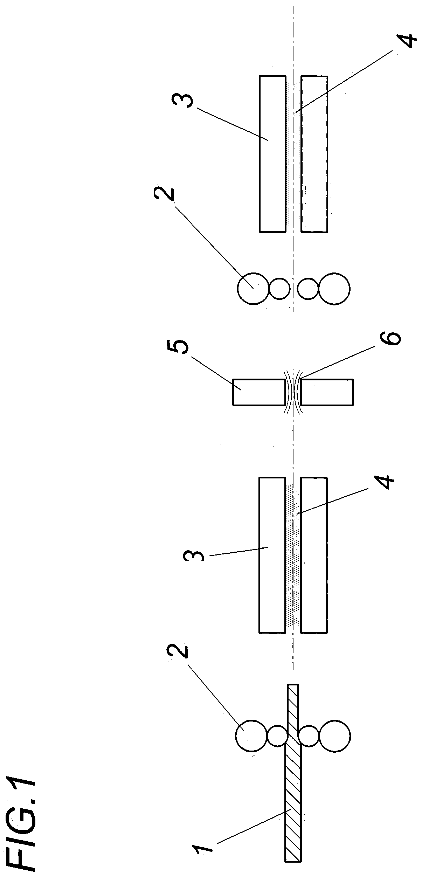

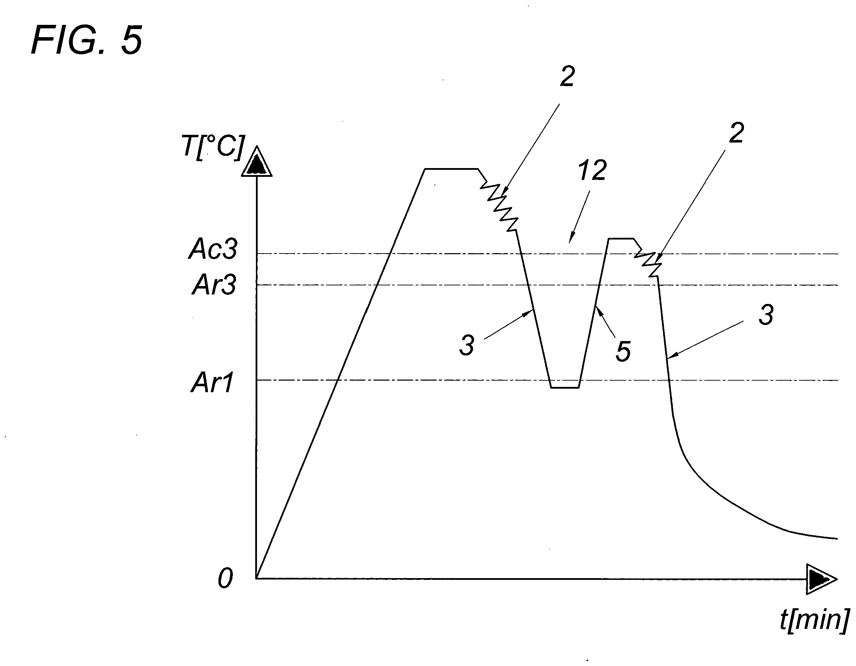

Vor dem Teilwalzen wird das Vormaterial, beispielsweise eine Bramme, mit Hilfe einer Einrichtung zur Brammenerwärmung auf über Ac3 Temperatur erwärmt, vorzugsweise auf 1000 bis 1200 Grad Celsius, was gemäß Fig. 5 dargestellt worden ist. Anschließend wird gemäß Fig. 1 und Fig. 5 das Vormaterial bzw. weiter mit Grobblech 1 bezeichnete Walzstück einem Walzen unterworfen, wobei dieses Walzen aus einem oder mehreren Teilwalzen mit eventuell mehreren Teilwalzschritten (Stichen) und einem Endwalzen mit eventuell mehreren Endwalzschritten (Stichen) bestehen kann, was beispielsweise durch ein reversierendes Walzen ermöglicht werden kann. Solch ein Verfahren kann beispielsweise eine Dreiphasenwalzung darstellen mit zwei Teilwalzen, nämlich Vorwalzen und Zwischenwalzen, und abschließendem Endwalzen. Der Einfachheit halber wird lediglich auf ein Teilwalzen eingegangen, zumal eine Umkörnung zwischen dem Teil- und Endwalzen auch einschließt, dass diese Umkörnung zwischen dem Teilwalzen erfolgen kann, auf das dann ein Endwalzen erfolgen kann. Als Teilwalzen wird sohin eine Umformung des Grobblechs 1 verstanden, mit der noch nicht die Endform des Grobblechs 1 erreicht wird.

Das erwärmte Grobblech 1 wird gemäß den Figuren 1 und 5 in weiterer Folge einem Walzgerüst 2 zum Teilwalzen zugeführt. Das teilumgeformte und noch nicht fertige Grobblech 1 wird im Zuge des thermomechanischen Behandlungsverfahrens auch einem Endumformen unterworfen, wobei hierfür ebenso das Walzgerüst 2 verwendet werden kann. Nach dem Endumformen, vorzugsweise mit einer Walzendtemperatur über Ar3, wird das Grobblech 1 beschleunigt abgekühlt, um damit bekanntermaßen für erhöhte Zähigkeitswerte am fertigen Grobblech 1 sorgen zu können. Eine derartige gegenüber einer Abkühlung bei Umgebungstemperatur beschleunigte Abkühlung kann beispielsweise durch eine Kühlstrecke 3 mit Wasser 4 zur Kühlung des fertiggewalzten Grobblechs 1 erfolgen. Vorstellbar ist eine Kühlstopptemperatur, bei der die beschleunigte Abkühlung abgebrochen wird, unterhalb der Ar3 Temperatur oder zumindest 100 Grad Celsius unter der Walzendtemperatur, wobei dann die weitere Abkühlung bei Umgebungstemperatur erfolgen kann, um dann zum fertigen Grobblech 1 zu gelangen.

Im Unterschied zum Stand der Technik jedoch wird das gesamte Grobblech 1 zwischen dem Teilumformen und dem Endumformen beschleunigt aus dem Austenitbereich (γ Phase) abgekühlt, wodurch ein feinkörniges Gefüge mit vergleichsweise geringem Ferritanteil ermöglicht werden kann, und dann induktiv vergleichsweise schnell wieder in diesen Temperaturbereich bzw. in diese Phase erwärmt, wie dies nach Fig. 1 und Fig. 5 erkannt werden kann. Dadurch kommt es zumindest kurzfristig zu einer Umkörnung 12 zumindest von Teilen des Austenitgefüges. Durch diese teilweise γ-α-γ Umwandlung kann eine besondere Kornfeinung ermöglicht werden. Zur beschleunigten Kühlung (mit Wasser) kann beispielsweise die bereits erwähnte Kühlstrecke 3 verwendet werden. Nicht dargestellt ist ein reversierendes Walzen, es ist jedoch für einen Fachmann klar, dass je nach Anforderungen an das Grobblech 1, dieses in mehreren Stichen von den jeweiligen Walzgerüsten 2 thermomechanisch bearbeitet werden kann.

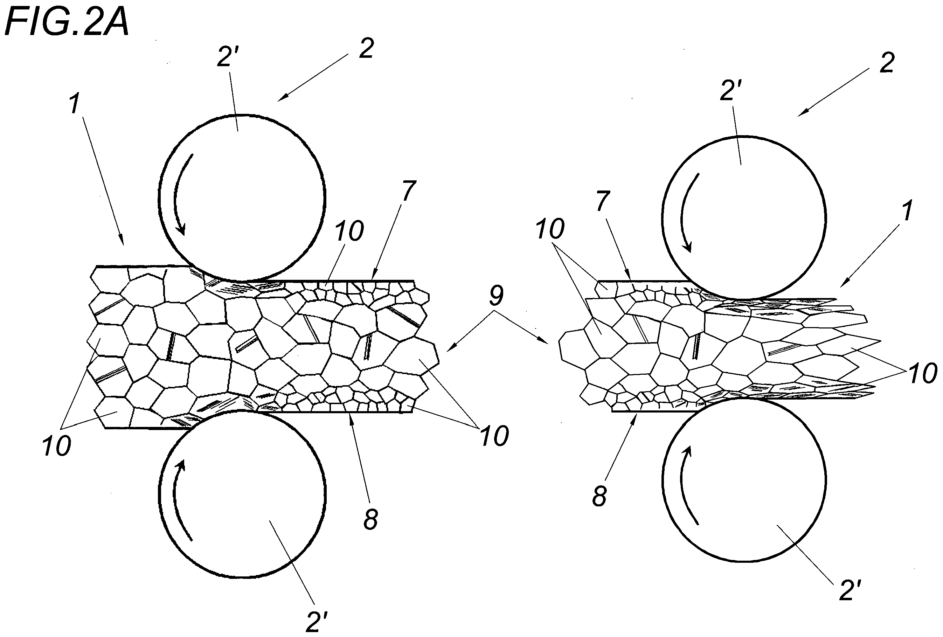

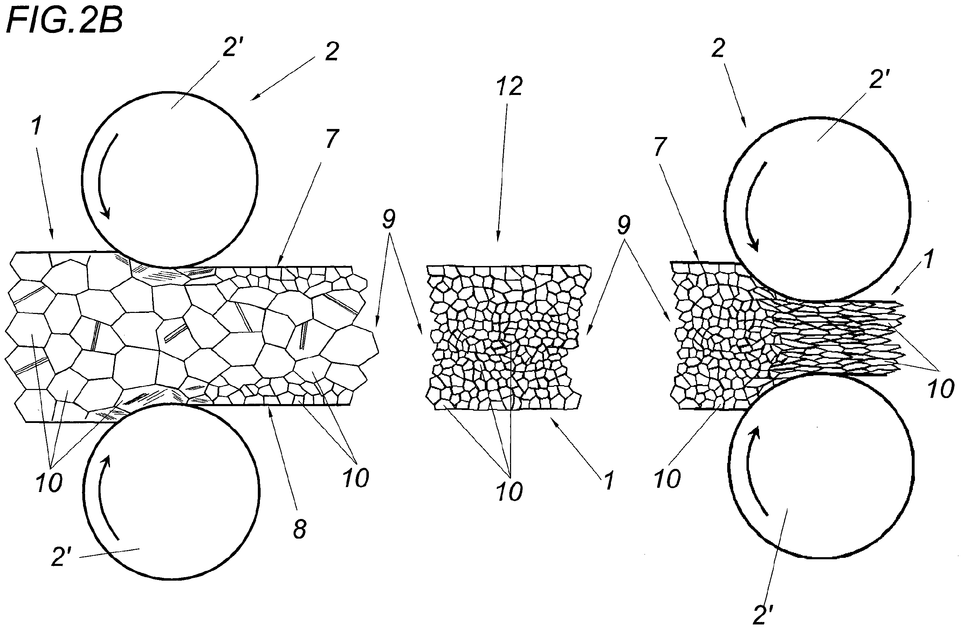

Die erfindungsgemäßen Vorteile werden nun anhand der Figuren 2A und 2B beispielsweise näher erläutert. Gemäß Fig. 2A ist ein konventionelles thermomechanisches Behandlungsverfahren für Grobbleche 1 stark vereinfacht dargestellt. Das Verfahren weist erstens ein Teilumformen bzw. Vorwalzen (z.B.: Bramme) auf, bei dem hohe Vergleichsumformgrade über Walzkörper 2' des Walzgerüsts 2 auf ein noch nicht fertiges Grobblech 1 bzw. Vormaterial aufgebracht werden. Aufgrund der Blechdicke d des Grobblechs 1 und der damit einhergehenden Problematik einer beschränkten Bearbeitungstiefe des Walzgerüsts 2 im Zusammenspiel mit einem Temperaturdrift zwischen Blechober- bzw. -unterseite 7, 8 zur Kernschicht 9 des Grobblechs 1 bzw. ins Innere des Grobblechs 1 hin kann hier keine homogene Korngröße des Austenits 10 über die Blechdicke d geschaffen werden. So bildet sich im Gegensatz zur Blechober- bzw. Unterseite 7, 8 im Kern 9 ein grobes bzw. größeres Austenitkorn 10, weil in diesem Bereich höhere Temperaturen und geringe Vergleichsumformgrade bestehen. Oft wird hier auch vom Bereich der halben Blechdicke 9 bzw. Kern 9 gesprochen, wobei einem Fachmann klar ist, dass die Bereiche fließend ineinander übergehen und sich daher keine klaren Bereichsgrenzlinien zwischen unterschiedlichen Korngrößen des Austenits 10 ziehen lassen. Der Einfachheit halber sind hier lediglich zwei markante Bereiche in den Figuren 2A und 2B dargestellt. Im Randbereich des Grobblechs 1 bzw. im Bereich der Blechoberseite 7 und Blechunterseite 8 stellt sich nun nach dem Teilwalzen aufgrund der vergleichsweise hohen Vergleichsumformgrade sowie geringeren Temperatur eine feinere Austenitkorngröße als im Inneren des Grobblechs ein. Dieser Vorgang ist im Wesentlichen durch Rekristallisation bedingt. Gemäß Fig. 2A sind diese unterschiedlichen Korngrößen im Grobblech 1 deutlich erkennbar. Dieser Unterschied kann nun selbst durch das Endumformen bzw. Fertigwalzen des Grobblechs 1 nicht mehr behoben werden, obwohl dieses Walzen bevorzugt als thermomechanisches Walzen (TM Walzen) unter der Rekristallisationstemperatur des Austenits 10 durchgeführt wird, wie dieses Walzen in Fig. 2A rechter Hand dargestellt ist. Durch das Endwalzen über die Walzkörper 2' vorzugsweise desgleichen Walzgerüsts 2 kann zwar das Austenitkorn 10 in den Randbereichen besonders gestreckt werden, im Kern 9 kann jedoch im Vergleich dazu nur eine geringe Austenitkornstreckung ermöglicht werden. Dies kann davon kommen, dass trotz thermomechanischem Walzen eine Rekristallisation des Austenits nicht ganz ausgeschlossen werden kann. Die Temperaturverteilung über die Blechdicke d ist hier nämlich ähnlich zum Vorwalzen, in den Bereichen der Blechober- bzw. -unterseite 7, 8 in der Temperatur geringer als im Kern 9 bzw. in Bereich der halben Blechdicke 9. Selbst durch ein thermomechanisches Endwalzen kann daher keine gleichmäßige Kornfeinung über die gesamte Blechdicke d des Grobblechs 1 geschaffen werden, was gegen eine hohe Zähigkeit, insbesondere Tieftemperaturzähigkeit besonders im Bereich der halben Blechdicke 9 spricht.

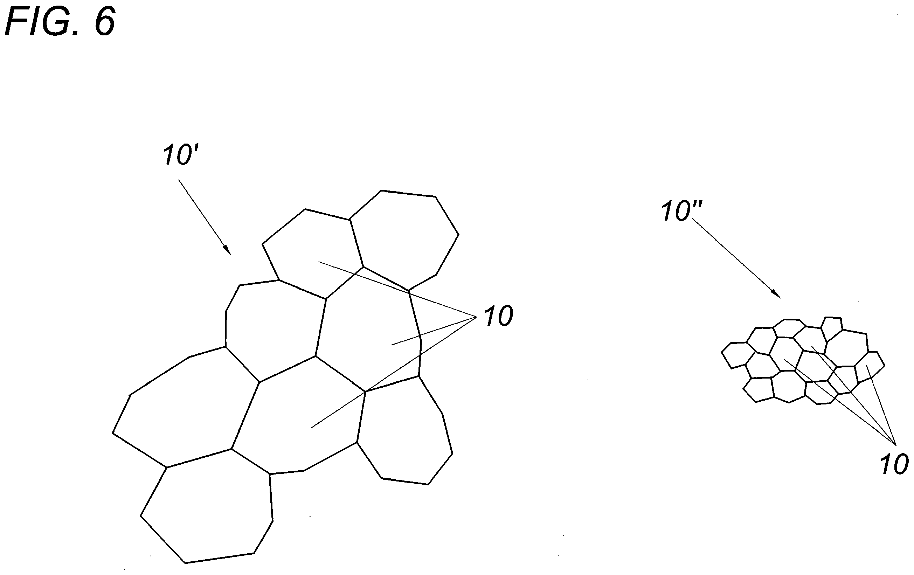

Im Gegensatz zum nach Fig. 2A bekannten thermomechanischen Behandlungsverfahren ist nach Fig. 2B das erfindungsgemäße thermomechanische Behandlungsverfahren für die Herstellung von Grobblech 1 aus einem Vormaterial dargestellt, was zu einer hervorragenden Zähigkeit, insbesondere Tieftemperaturzähigkeit, am Grobblech 1 führt. Zunächst gleichen sich die beiden thermomechanischen Behandlungsverfahren beim Teilumformen bzw. Vorwalzen mit Walzkörper 2' eines Walzgerüsts 2. Zum Unterschied jedoch findet vor dem Endumformen bzw. Fertigwalzen ebenso mit Walzkörper 2' des Walzgerüst 2 ein erfindungsgemäßer Zwischenschritt des Umkörnens 12 des Gefüges des Grobblechs 1 statt. Solch ein Umkörnen 12 umfasst ein beschleunigtes Abkühlen (Kühlstrecke 3 mit Wasser) samt einer induktiven Erwärmung (induktive Längsfelderwärmung 5) und hat, wie in Fig. 2B mittig abgebildet auf das Grobblech einen besonderen Einfluss auf das Gefüge des Austenits 10, insbesondere auf den Kern 9 bzw. den Bereich der halben Blechdicke 9 des Grobblechs 1. Damit kann nämlich überraschend der bestehende Durchmesser des Austenits verringert und der Durchmesserunterschied zwischen den Körnern des Austenits 10 im Bereich der Blechober- bzw. -unterseite 7 bzw. 8 (im Wesentlichen geschaffen durch das Vorwalzen) auf der einen Seite und den innenliegenden Körnern des Austenits 10 auf der anderen Seite angeglichen werden, wie dies auch in Fig. 2B anschließend an das Vor- oder Teilwalzen durchgeführte Umkörnen er- - kannt werden kann. Erfindungsgemäß kann so ein gleichmäßigeres Feinkorn bzw. homogeneres Gefüge des Austenits 10 über die gesamte Blechdicke d dem oder den nächsten Verfahrensschritten zur Verfügung gestellt werden. Zusätzlich wird jedoch auch noch der technische Effekt genützt, dass sich durch das erfindungsgemäße Umkörnen verbesserte Vorrausetzungen für das Endumformen bzw. Fertigwalzen ergeben. Es kann sich nämlich im Gegensatz zum Stand der Technik für das bevorzugte thermomechanische Walzen als Endumformen mit dem Walzgerüst 2 ein Temperaturgradient über die Grobblechdicke einstellen, der für eine höhere Temperatur der Ober- bzw. Unterseite 7, 8 gegenüber dem Kern 9 des Grobblechs 1 bzw. seinem Inneren sorgt. Dadurch kann eine eventuelle Rekristallisation des Austenits 10 selbst im Bereich der halben Blechdicke 9 unterdrückt werden, was bei vergleichsweise großen Blechdicken selbst durch ein TM Walzen nicht ganz verhindert werden kann, so dass in diesem Bereich auch die walzgestreckten Austenitkörner 10 im Wesentlichen erhalten bleiben können und sich auch eine Erhöhung der Fehlstellendichte einstellen kann. Dieses besonders feine Austenitgefüge ist in der Fig. 2B anschließend an das Endumformen bzw. Fertigwalzen zu erkennen, was zusätzlich eine homogene Streckung des Austenits 10 über die Grobblechdicke d zeigt. Damit kann beispielsweise selbst bei fertigen Grobblechen 1 mit einer Dicke d größer 24mm ein Endgefüge erreicht werden, dass eine ASTM Korngröße (ASTM E112 1996 - "American Society for Testing and Materials": Methode zur Messung der Anzahl an Körnern pro Flächeneinheit im Anschliff) des ehemaligen Austenits 10 von größer gleich 8,5 sowie ein gestrecktes ehemaliges Austenitkorn 10 aufweist. Bekannte technologische Grenzen in erreichbaren Zähigkeitswerten können so erfindungsgemäß überwunden werden, wodurch selbst auch bei Grobblechen höherer Dicke, beispielsweise über 24 mm, Gefügezustände mit höherwertigen Zähigkeitseigenschaften erreichbar sind. Zur Verdeutlichung dieser Vorteile wird auch auf die Fig. 6 verwiesen. Hier sind in vergrößerter Ansicht mehrere Austenitgefüge in Relation dargestellt: mit dem Bezugszeichen 10' ein Austenitgefüge mit Austenitkörner 10, welches erreicht werden kann, wenn das Gefüge einer konventionellen bzw. bekannten Wärmebehandlung (Vergüten oder Normalglühen) unterworfen wird, und mit dem Bezugszeichen 10" ein deutlich feineres Austenitgefüge mit Austenitkörner 10, welches erfindungsgemäß geschaffen werden kann.

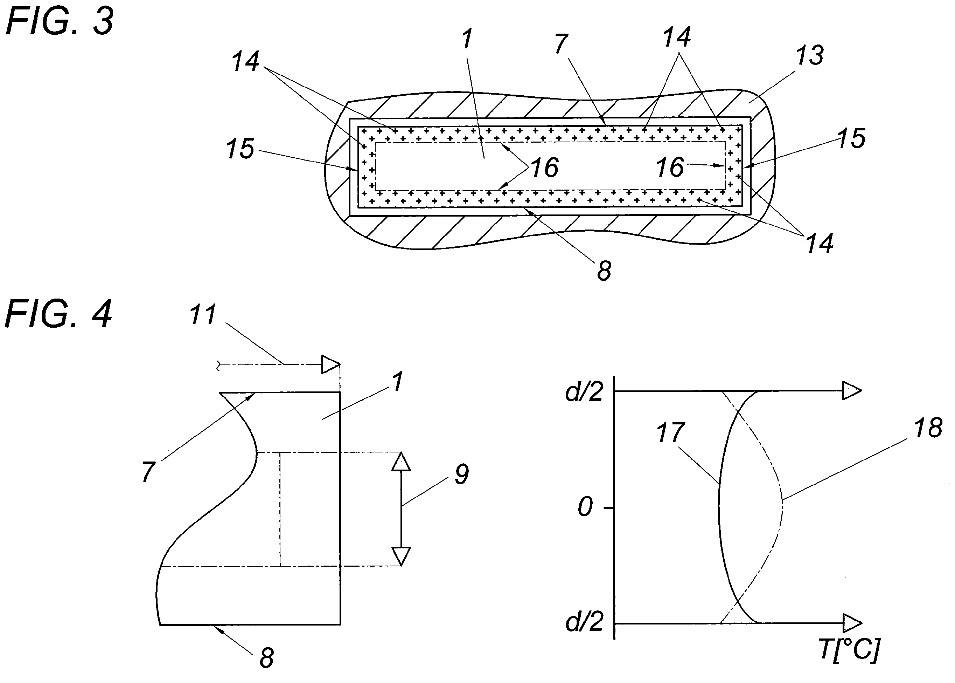

Insbesondere hat sich eine induktive Erwärmung mit Hilfe einer Längsfelderwärmung 5 als vorteilhaft herausgestellt, was gemäß der Fig. 3 beispielsweise dargestellt ist. Das im Wesentlichen in Längsrichtung des Grobblechs 1 ausgerichtete Magnetfeld 6 zeigte hervorragende Eigenschaften in den durch das thermomechanische Behandlungsverfahren erzielbaren Zähigkeitswerten. So wird das Grobblech 1 in Längsrichtung durch eine Spule 13 geführt, wobei die mit Wechselspannung beaufschlagte Spule 13 Wirbelströme 14 im Wesentlichen im Randbereich der Ober- und Unterseite 7, 8 sowie an den Längsseiten 15 des Grobblechs 1 induziert. Es bildet sich so, wie in Fig. 3 vereinfacht dargestellt, eine geschlossene Erwärmungszone 16 aus, was zu einer gleichmäßig schnellen Erwärmung zur Schaffung vorteilhafter Gefügeverhältnisse genützt werden kann.

Über das Magnetfeld 6 wird eine, nach Fig. 4 dargestellte Temperaturverteilung 17 über die Grobblechdicke d bzw. den Grobblechquerschnitt geschaffen. Dadurch kann im Bereich der gesamten Blechober- bzw. Blechunterseite 7, 8 eine höhere Temperatur gegenüber der Temperatur im Inneren des Grobblechs 1 sicherstellt werden, so dass das Endumformen als TM Walzen zu verbesserten Zähigkeitswerten am Grobblech 1 führen kann, wie bereits vorstehend erwähnt. Gerade eine induktive Längsfelderwärmung 5 des Grobblechs 1 kann auf einfache konstruktive Weise für eine gemäß Fig. 4 dargestellte Temperaturverteilung sorgen. Andere Konstruktionen beispielsweise mit Hilfe von induktiver Querfelderwärmung sind denkbar, um gleichwie bei der Längsfelderwärmung eine Erwärmung über im Wesentlichen die gesamte Blechbreite 11 des Grobblechs 1 zu erlangen.

Im Vergleich dazu ist in der Fig. 4 auch eine Temperaturverteilung 18 eines thermomechanischen Behandlungsverfahren nach dem Stand der Technik dargestellt - wie zu erkennen, unterscheidet sich davon der erfindungsgemäße Temperaturverlauf 17 deutlich (nahezu gegenläufiger Gradient).

Eine Kornfeinung kann insbesondere verbessert werden, wenn das Walzstück unter Ar1 beschleunigt abgekühlt wird, was insbesondere der Fig. 5 entnommen werden kann. Dadurch erreicht das gesamte Gefüge wenigstens kurzfristig die α Phase und es tritt nach einem Rückerwärmen eine vollständige Umkörnung 12 des gesamten Austenitgefüges ein.

Vorteilhaft erfolgt das induktive Erwärmen auf eine derart hohe Temperatur über Ac3, dass mit dem anschließenden Endwalzen das Grobblech 1 noch eine Walzendtemperatur über Ar3 aufweist, die vorzugsweise im Bereich von 680 bis 920 Grad Celsius liegt. Damit kann nach dem induktiven Erwärmen des Grobbleches 1 ohne Wartezeit das Endwalzen beginnen. Besonders kann damit auch die Temperatur der Kernschicht 9 des Grobblechs eingestellt werden, um gerade bei dicken Grobblechen auch dessen vergleichsweise schwer bearbeitbaren Kern 9 vorteilhaft thermomechanisch behandeln zu können. Temperaturen im Bereich 0 bis 80 Grad Celsius über Ar3 Temperatur, insbesondere 20 Grad über Ac3 Temperatur, haben sich hierfür bewährt.

Das erfindungsgemäße thermomechanische Behandlungsverfahren hat sich insbesondere bei einer fertiggewalzten Grobblechdicke von über 24mm, vorzugsweise von 25 bis 100mm als vorteilhaft herausgestellt. Damit konnten mechanisch-technologische Eigenschaften erreicht werden, die durch ein Warmwalzen, durch eine dem Stand der Technik entsprechende thermomechanische Behandlung als auch durch eine Wärmebehandlung für sich alleine nicht erreichbar sind.

Im Allgemeinen konnte durch das erfindungsgemäße Verfahren ab einer Blechdicke von über 24mm vorzugsweise von 25mm festgestellt werden, dass damit eine deutliche Verringerung der Korngröße des Austenits 10 erzielt wird und somit auch die Zähigkeit bzw. Tieftemperaturzähigkeit des daraus entstehenden Umwandlungsgefüges verbessert werden konnte. So kann die Verschiebung des Sprödbruchübergangs hin zu tieferen Temperaturen, beispielsweise ermittelt durch einen Kerbschlagbiegeversuch oder den "Battelle Drop Weight Tear" Test (BDWTT), genützt werden, aus solch einem behandelten Grobblech 1 Gasleitungsrohre oder "Offshore" Plattformen zu fertigen, da diese Werkstoffe bei tiefen Temperaturen ausreichend zäh und schweißbar sein müssen. Die Erfindung überwindet daher die Grenzen zwischen Blechdicke d und erreichbaren Zähigkeitswerten, in dem das Grobblech 1 in Richtung wenigstens einer teilweisen Umkörnung des Austenitgefüges beschleunigt temperaturbelastet wird, was sowohl durch das beschleunigte Abkühlen als auch das induktiv schnelle Erwärmen geschaffen wird, insbesondere mit einer über den Zeitverlauf gemittelten induktiven Erwärmen von größer gleich 1 Grad Celsius pro Sekunde.

So zeigten Versuchsergebnisse beispielsweise bei einer Blechdicke von 25mm eine Verbesserung der Sprödbruchübergangstemperatur ermittelt im BDWTT (gemäß Norm DIN EN 10274) um etwa 40 Grad Celsius, was auf Grundlage des erfindungsgemäßen thermomechanischen Behandlungsverfahren ermöglicht werden konnte.

Im Allgemeinen wird erwähnt, dass gemäß der DIN EN 10052 folgende Definitionen bestehen:
Ac3: Temperatur, bei der die Umwandlung des Ferrits in Austenit bei einem Wärmen endet.
Ar1: Temperatur, bei der die Umwandlung des Austenits in Ferrit oder in Ferrit und Zementit bei einem Abkühlen endet.
Ar3: Temperatur, bei der die Bildung des Ferrits bei einem Abkühlen beginnt.

## Patentansprüche

1. Thermomechanisches Behandlungsverfahren für die Herstellung von Grobblech (1) aus einem Vormaterial zur Erhöhung der Zähigkeit, insbesondere Tieftemperaturzähigkeit, des Grobblechs (1), bei dem das Grobblech (1) erwärmt, durch Walzen teil- und endumgeformt und gegenüber einer Abkühlung bei Umgebungstemperatur beschleunigt abgekühlt wird, wobei das für ein Teilumformen auf über Ac3 Temperatur erwärmte Grobblech (1) nach seinem Endumformen beschleunigt abgekühlt wird, **dadurch gekennzeichnet, dass** das Grobblech (1) zwischen Teil- und Endumformen beschleunigt auf unter Ar3 Temperatur abgekühlt und anschließend induktiv auf über Ac3 Temperatur erwärmt wird, wobei ein Grobblech mit einer Stahllegierung aufweisend:
| | |
|---|---|
| 0,02 bis 0,1 Massen% | (C) Kohlenstoff, |
| 1,0 bis 2,0 Massen% | (Mn) Mangan, |
| 0 bis 0,1 Massen% | (V) Vanadium und (Ti) Titan und (Nb) Niob, |
| 0 bis 1,0 Massen% | (Cr) Chrom und (Mo) Molybdän, |
| 0 bis 1,0 Massen% | (Cu) Kupfer und (Ni) Nickel, |
| 0 bis 0,003 Massen% | (B) Bor, |
einen CE_{IIW} Wert von 0,2 bis 0,7 Massen%,
Rest Verunreinigungen und (Fe) Eisen,
verwendet wird.

2. Thermomechanisches Behandlungsverfahren nach Anspruch 1, **dadurch gekennzeichnet, dass** das Endumformen mit Hilfe eines thermomechanischen oder eines rekristallisationskontrollierten Walzens durchgeführt wird.

3. Thermomechanisches Behandlungsverfahren nach Anspruch 1 oder 2, **dadurch gekennzeichnet, dass** über das Endumformen eine Grobblechenddicke (d) von größer gleich 24 mm eingestellt wird.

4. Thermomechanisches Behandlungsverfahren nach Anspruch 1, 2 oder 3, **dadurch gekennzeichnet, dass** das Grobblech (1) anschließend an das Teilumformen beschleunigt abgekühlt wird.

5. Thermomechanisches Behandlungsverfahren nach einem der Ansprüche 1 bis 4, **dadurch gekennzeichnet, dass** das Grobblech (1) nach dem Teilumformen beschleunigt auf unter Ar1 Temperatur abgekühlt wird.

6. Thermomechanisches Behandlungsverfahren nach einem der Ansprüche 1 bis 5, **dadurch gekennzeichnet, dass** das Grobblech (1) induktiv auf seine Temperatur zum Endumformen erwärmt und anschließend dem Endumformen unterworfen wird.

7. Thermomechanisches Behandlungsverfahren nach einem der Ansprüche 1 bis 6, **dadurch gekennzeichnet, dass** das Grobblech (1) mit einer Walzendtemperatur beim Endumformen von größer gleich Ar3 beschleunigt gekühlt wird.

8. Thermomechanisches Behandlungsverfahren nach einem der Ansprüche 1 bis 7, **dadurch gekennzeichnet, dass** das Grobblech (1) folgenden aneinander anschließenden Verfahrensschritte unterworfen wird, nämlich Teilumformen, beschleunigtes Abkühlen, induktives Erwärmen, eventuelles Entzundern, Endumformen und beschleunigtes Abkühlen.

9. Thermomechanisches Behandlungsverfahren nach einem der Ansprüche 1 bis 8, **dadurch gekennzeichnet, dass** das Grobblech (1) über seine gesamte Blechbreite (11) und insbesondere über eine im Bereich der Blechober- und -unterseite (7, 8) liegenden Erwärmungszone (16) induktiv erwärmt wird.

10. Thermomechanisches Behandlungsverfahren nach einem der Ansprüche 1 bis 9, **dadurch gekennzeichnet, dass** das Blech (1) mit Hilfe einer Längsfelderwärmung (5) induktiv erwärmt wird.

11. Thermomechanisches Behandlungsverfahren nach einem der Ansprüche 1 bis 10, **dadurch gekennzeichnet, dass** das Grobblech (1) einem reversierenden Teil- und/oder Endwalzen unterworfen wird.

12. Grobblech mit einem Gefüge, aufweisend eine geringe Korngröße, hergestellt durch ein thermomechanisches Behandlungsverfahren nach einem der Ansprüche 1 bis 11, und mit einem Gefüge, aufweisend eine ASTM Korngrößennummer des ehemaligen Austenits (10) von größer gleich 8,5 sowie ein gestrecktes ehemaliges Austenitkorn (10).

13. Grobblech nach Anspruch 12, **dadurch gekennzeichnet, dass** das Grobblech (1) eine Grobblechenddicke (d) nach dem Endwalzen von größer gleich 24mm aufweist.

## Claims

1. . Thermomechanical treatment process for the production of heavy plate (1) from a raw material to increase the toughness, more particular low-temperature toughness, of the heavy plate (1), in which the heavy plate (1) is heated, partially and finally formed by rolling and cooled down at an accelerated rate compared to a cool-down at ambient temperature, wherein the heavy plate (1) heated for partial forming to above Ac3 temperature is coooled accelerated after its final forming, **characterized in that** the heavy plate (1) is between partial and final forming is cooled down to below Ar3 temperature and then inductively heated to above Ac3 temperature, wherin a heavy plate with a steel alloy having:
0.02 to 0.1 mass% (C) carbon,
1.0 to 2.0 mass% (Mn) manganese,
0 to 0.1 mass% (V) vanadium and (Ti) titanium and (Nb) niobium,
0 to 1.0 mass% (Cr) chromium and (Mo) molybdenum,
0 to 1.0 mass% (Cu) copper and (Ni) nickel,
0 to 0.003 mass% (B) boron,
a CEIIW value of 0.2 to 0.7 mass%,
residual impurities and (Fe) iron,
is used.

2. Thermomechanical treatment method according to claim 1, **characterized in that** the final forming is carried out with the aid of a thermomechanical or a recrystallization-controlled rolling.

3. Thermomechanical treatment method according to claim 1 or 2, **characterized in that** a final plate thickness (d) of greater than or equal to 24 mm is set by the final forming.

4. Thermomechanical treatment method according to claim 1, 2 or 3, **characterized in that** the heavy plate (1) is then cooled to accelerate the partial forming.

5. Thermomechanical treatment method according to one of claims 1 to 4, **characterized in that** the heavy plate (1) is accelerated to below Ar1 temperature after the partial forming.

6. Thermomechanical treatment method according to one of claims 1 to 5, **characterized in that** the heavy plate (1) is inductively heated to its temperature for final forming and subsequently subjected to the final forming.

7. Thermomechanical treatment method according to one of claims 1 to 6, **characterized in that** the heavy plate (1) is cooled accelerated with a final rolling temperature at the final forming of greater than or equal to Ar3.

8. Thermomechanical treatment method according to one of claims 1 to 7, **characterized in that** the heavy plate (1) is subjected to the following process steps one after the other, namely partial forming, accelerated cooling, inductive heating, possible descaling, final forming and accelerated cooling.

9. Thermomechanical treatment method according to one of claims 1 to 8, **characterized in that** the heavy plate (1) is heated inductively over its entire plate width (11) and more particularly over a heating zone (16) in the area of the plate top and bottom (7, 8).

10. Thermomechanical treatment method according to one of claims 1 to 9, **characterized in that** the sheet (1) is heated inductively with the aid of longitudinal field heating (5).

11. Thermomechanical treatment method according to one of claims 1 to 10, **characterized in that** the heavy plate (1) is subjected to a reversing partial and / or final rolling.

12. Heavy plate with a structure, having a small grain size, produced by a thermomechanical treatment method according to one of claims 1 to 11, and with a structure, having an ASTM grain size number of the former austenite (10) greater than 8.5 as well as a stretched former austenite grain (10).

13. Heavy plate according to claim 12, **characterized in that** the heavy plate (1) has a heavy plate end thickness (d) after the final rolling of greater than or equal to 24 mm.

## Revendications

1. Procédé de traitement thermomécanique pour la fabrication de tôle forte (1) à partir d'un matériau de départ afin d'accroître la ténacité, en particulier la ténacité à basse température, de la tôle forte (1), dans lequel la tôle forte (1) est chauffée, mise en forme partielle et finale par des cylindres et soumise à un refroidissement accéléré par rapport au refroidissement à la température ambiante, dans lequel la tôle forte (1) chauffée pour une mise en forme partielle au-dessus de la température Ac3 est soumise à un refroidissement accéléré après sa mise en forme finale, **caractérisé en ce que** la tôle forte (1) est soumise à un refroidissement accéléré en dessous de la température Ar3 entre la mise en forme partielle et finale puis chauffée par induction au-dessus de la température Ac3, la tôle forte utilisée étant un alliage d'acier qui contient :
| | |
|---|---|
| 0,02 à 0,1 % de la masse de | carbone (C), |
| 1,0 bis 2,0 % de la masse de | manganèse (Mn), |
| 0 bis 0,1 % de la masse de | vanadium (V), de titane (Ti) et de niobium (Nb), |
| 0 bis 1,0 % de la masse de | chrome (Cr) et de molybdène (Mo), |
| 0 bis 1,0 % de la masse de | cuivre (Cu) et de nickel (Ni), |
| 0 bis 0,003 % de la masse de | bore (B), |
un taux CE_{IIW} de 0,2 à 0,7 % de la masse,
des impuretés pour le reste et du fer (Fe).

2. Procédé de traitement thermomécanique selon la revendication 1, **caractérisé en ce que** la mise en forme finale est effectuée à l'aide d'un laminage thermomécanique ou d'un laminage à recristallisation contrôlée.

3. Procédé de traitement thermomécanique selon la revendication 1 ou 2, **caractérisé en ce que** la mise en forme finale ajuste l'épaisseur de la tôle forte (d) à une valeur égale ou supérieure à 24 mm.

4. Procédé de traitement thermomécanique selon la revendication 1, 2 ou 3, **caractérisé en ce que** la tôle forte (1) est soumise à un refroidissement accéléré après la mise en forme partielle.

5. Procédé de traitement thermomécanique selon l'une des revendications 1 à 4, **caractérisé en ce que** la tôle forte (1) est soumise à un refroidissement accéléré en dessous de la température Ar1 après la mise en forme partielle.

6. Procédé de traitement thermomécanique selon l'une des revendications 1 à 5, **caractérisé en ce que** la tôle forte (1) est chauffée par induction à sa température de mise en forme finale puis soumise à la mise en forme finale.

7. Procédé de traitement thermomécanique selon l'une des revendications 1 à 6, **caractérisé en ce que** la tôle forte (1) est soumise à un refroidissement accéléré jusqu'à une température en fin de laminage égale ou supérieure à Ar3 lors de la mise en forme finale.

8. Procédé de traitement thermomécanique selon l'une des revendications 1 à 7, **caractérisé en ce que** la tôle forte (1) est soumise aux étapes de procédé successives suivantes : mise en forme partielle, refroidissement accéléré, chauffage par induction, décalaminage éventuel, mise en forme finale et refroidissement accéléré.

9. Procédé de traitement thermomécanique selon l'une des revendications 1 à 8, **caractérisé en ce que** la tôle forte (1) est chauffée par induction sur toute sa largeur de tôle (11) et en particulier sur une zone d'échauffement (16) située au niveau des faces supérieure et inférieure de la tôle (7, 8).

10. Procédé de traitement thermomécanique selon l'une des revendications 1 à 9, **caractérisé en ce que** la tôle (1) est chauffée par induction à l'aide d'un chauffage à flux longitudinal (5).

11. Procédé de traitement thermomécanique selon l'une des revendications 1 à 10, **caractérisé en ce que** la tôle forte (1) est soumise à un laminage partiel et/ou final à marche inverse.

12. Tôle forte avec une structure présentant une petite taille de grains, fabriquée par un procédé de traitement thermomécanique selon l'une des revendications 1 à 11, et avec une structure présentant un numéro de taille de grains ASTM égal ou supérieur à 8,5 correspondant à l'ancienne austénite (10) et des grains d'ancienne austénite (10) allongés.

13. Tôle forte selon la revendication 12, **caractérisé en ce que** la tôle forte (1) présente une épaisseur finale (d) après le laminage final égale ou supérieure à 24 mm.
